# EUROPEAN PATENT APPLICATION

(11) **EP 4 542 839 A1**
(43) Date of publication of application: **23.04.2025**
(21) Application number: 23204891.8
(22) Date of filing: 20.10.2023
(51) Int. Cl.: H02M 3/158

(54) **INVERTING BUCK-BOOST CONVERTER AND POWER CONVERTER COMPRISING INVERTING BUCK-BOOST CONVERTER**

(71) Applicant: Infineon Technologies Austria AG, 9500 Villach (AT)
(72) Inventor: HINZ, Torsten, 86157 Augsburg (DE); WANG, Yi, 80939 München (DE)
(74) Representative: Kraus & Lederer PartGmbB

(57) **Abstract**

Buck-boost converters and corresponding power converters are disclosed. The buck-boost converter includes a transistor (11) having a terminal, e.g. source terminal, coupled to an output terminal (17B) and a terminal of a capacitor (15).

## Description

### TECHNICAL FIELD

The present application relates to buck-boost converters and to power converters comprising buck-boost converters.

### BACKGROUND

Power converters are devices which generally convert an input electrical power (voltage, current) to an output electrical power (voltage, current). For example, an input voltage, which may be supplied by a mains voltage from a power network, by a battery in a vehicle or the like is converted to an output power having a voltage and current suitable for a particular appliance.

Power converters include switched mode power supplies (SMPS), where an operation of a switch, which is switched on and off according to some switching scheme, for example a pulse width modulation scheme, determines the output voltage and/or current. Such a switch may be controlled by controller, for example based on some feedback indicative of the actual output voltage and/or current.

Some power converters provide a galvanic isolation, where for example a transformer serves to couple a primary side receiving the input electrical power to a secondary side outputting the output electrical power. One type of such power converters providing a galvanic isolation are flyback converters, where operation of a switch on the primary side controls transfers of power to the secondary side.

A controller controlling the above switch and/or other parts of the power converter must be supplied with power. In power converters providing a galvanic isolation, sometimes an auxiliary winding of the transformer is used to provide power. As for example in power converters having a variable output voltage also an auxiliary voltage provided by such an auxiliary winding varies, it is desirable to regulate the voltage provided by the auxiliary winding to a predefined value usable by the controller. For example, for a power converter used for USB-PD (Universal Serial Bus - Power Delivery standardized for the USB bus) the output voltage may range from 5V to 48V. With a minimum requirement for example of 12V for supplying a controller, tapped at an auxiliary winding the supply voltage would vary by the same factor as the output voltage, for example from 12V to 115V. Designing a controller operable with his range of supply voltages is difficult, if not impossible.

Various conventional solutions have been proposed to overcome this issue, for example using a depletion MOSFET together with a Zener diode to clamp the maximum voltage, divided auxiliary windings, combination of clamp circuit and boost converter or a Greinacher half-wave voltage doubler. These solutions, while generally feasible at least in some voltage ranges, may suffer from a high area requirement for implementing the circuit and thus a high bill of materials (BOM) and/or poor power efficiency.

### SUMMARY

A buck-boost converter as defined in claim 1 and a power converter as defined in claim 6 are provided. The dependent claims define further embodiments.

In an embodiment, a power converter is provided comprising:
a first input terminal and a second input terminal configured to receive an input voltage,
a first output terminal and a second output terminal configured to provide an output voltage,
a transistor, an inductor, a capacitor, a first diode and a second diode.

A first terminal of the capacitor is coupled to the first output terminal and a cathode of the second diode, an anode of the second diode is coupled to the first terminal of the inductor and a second terminal of the capacitor is coupled to the second output terminal and the second terminal of the inductor.

The transistor comprises a first terminal, a second terminal and a control terminal, wherein the transistor is switchable by applying a control signal between the second terminal and the control terminal,
wherein the second terminal of the transistor is coupled to a second terminal of the inductor.

### Either:

- the first diode is provided with an anode coupled to the first terminal of the inductor and a cathode coupled to the first input terminal, and the first terminal of the transistor is coupled to the second input terminal,
   or:
- a first terminal of the inductor is coupled to the first input terminal
the first diode is provided with the anode coupled to the second input terminal and the cathode coupled to the first terminal of the transistor.

A primary side configured to receive an input power and being coupled to a primary side winding to a transformer, and a secondary side configured to output an output power and being coupled to a secondary side winding of the transformer. Furthermore, the power converter comprises a buck-boost converter as described above, wherein the first input terminal of the buck-boost converter is coupled to a first terminal of an auxiliary winding of the transformer, and the second input terminal of the buck-boost converter is coupled to a second terminal of the auxiliary winding.

The above summary is merely a brief overview over some embodiments and is not to be construed as limiting in any way, as other embodiments may include different features.

### BRIEF DESCRPTION OF THE DRAWINGS

Fig. 1A is a circuit diagram of a buck-boost converter according to an embodiment, and Fig. 1B shows a variation of the embodiment of Fig. 1A.
Figure 2 illustrates how the buck-boost converter of Fig. 1 is related to a conventional buck-boost converter.
Fig. 3A is a circuit diagram of a power converter according to an embodiment.
Fig. 3B is a timing diagram illustrating operation of the power converter of Fig. 3A.
Fig. 4 is a circuit diagram of a power converter according to an embodiment.
Fig. 5 is a circuit diagram of a power converter according to an embodiment.
Fig. 6 is a circuit diagram of a power converter according to an embodiment.

### DETAILED DESCRPTION

In the following, various embodiments will be described in detail referring to the attached drawings. These embodiments are given by way of example only and are not to be construed as limiting.

Features from different embodiments may be combined to form further embodiments. Variations, details, or modifications described with respect to one of the embodiments are also applicable to other embodiments and will therefore not be described repeatedly. In the drawings, like elements are designated with the same reference numerals.

Embodiments of buck-boost converters described herein use a transistor as a switch. Transistors are described as having a first terminal, a second terminal and a control terminal. Such a transistor is switchable by applying a control signal (voltage or current) between the control terminal and the second terminal. Such transistors may operate as unidirectional switches. In the following embodiments, MOSFETs (metal oxide semiconductor field effect transistors) are used as examples for switch transistors. In this case, the first terminal corresponds to the drain terminal, the second terminal corresponds to the source terminal, and the control terminal corresponds to the gate terminal. Switching is effected by applying a suitable gate-source voltage as control signal. Note that MOSFETs usually act as unidirectional switches due to the presence of a body diode. This means that in an off-state, a MOSFETs blocks current from the first terminal (drain terminal) to the second terminal (source terminal), while current may still flow via the body diode in the reverse direction via the body diode if the forward voltage of the body diode is exceeded. In an on-state, current may flow in both directions. While MOSFETs are used as examples below, in other embodiments other types of transistors may be used, like bipolar junction transistors (BJTs) or insulated gate bipolar transistors (IGBTs). Also such transistors may be unidirectional switches due to body diode or freewheeling diodes present. In case of a BJT or IGBT, the first and second terminals are the collector and emitter terminals, respectively, and in case of a BJT the control terminal is the base terminal. Furthermore, besides silicon based transistors also transistors based on other semiconductor materials may be used, for example Gallium Nitride (GaN) based transistors. In such implementations, a freewheeling diode may be explicitly provided, as the forward voltage of a body diode of a GaN transistor may be to high to allow current flow, which may be needed in some applications. In other applications, no explicit freewheeling diode may need to be provided.

Connections or couplings shown in the drawings or described herein refer to electrical connections or couplings unless noted otherwise. Such connections or couplings may be modified, for example, by adding additional elements or removing elements, as long as the general purpose of the connection or coupling, for example to provide a signal, voltage, current etc., is essentially maintained. This means essentially that the connections or couplings shown in the figures and described herein are to be seen as functional connections which may be modified as long as the function of the connection is maintained. The connections or couplings, if no intervening element is shown, may be implemented as direct connections (e.g. by a metal wire, lead, corresponding part of a metal layer in a chip etc.).

Embodiments described herein relate to buck-boost converters and to power converters including such buck-boost converters to provide an internal supply voltage for the power converter. A buck-boost converter generally is a type of DC to DC converter (i.e. converting one direct current (DC) input voltage to another DC output voltage), where the converter may be operated such that the output voltage magnitude is greater than, equal to or less than the input voltage magnitude.

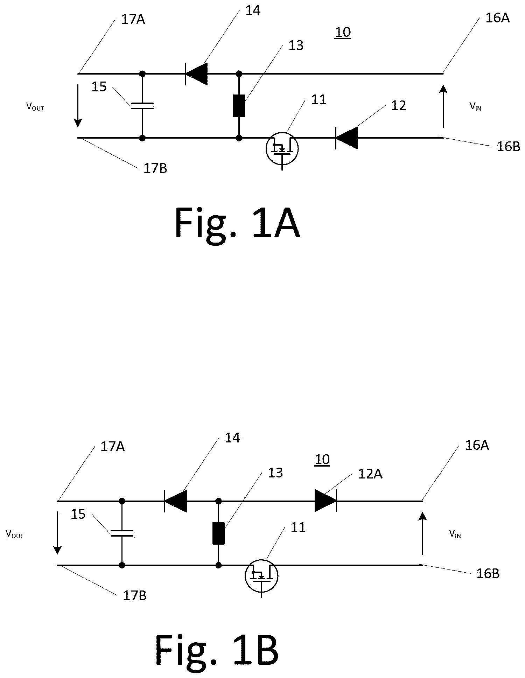

Fig. 1A illustrates a buck-boost converter 10 according to an embodiment. The buck-boost converter of Fig. 1A converts an input voltage V_{IN} to an output voltage V_{OUT}. The topology of Fig. 1A is a so-called inverted topology, where the polarity of the output voltage is opposite to the polarity of the input voltage.

The input voltage V_{IN}, as can be seen in Fig. 1A, is received at a first input terminal 16A and a second input terminal 16B. The output voltage is output between a first output terminal 17A and a second output terminal 17B, which in Fig. 1A corresponds to first and second terminals of a capacitor 15. The buck-boost converter further comprises transistor 11, an inductor 13, a first diode 12 and a second diode 14.

For simplicity's sake, in the following figures the designation of the input and output terminals is omitted and only the input voltage V_{IN} and the output voltage V_{OUT}, or corresponding voltages, are shown.

A drain terminal of transistor 11 is coupled to a cathode of a first diode 12, and a source terminal of transistor 11 is coupled to a second terminal of inductor 13. An anode of first diode 12 is coupled to second input terminal 16B. A first terminal of inductor 13 is coupled to first input terminal 16A.

A first terminal of capacitor 15 is, as already mentioned, coupled to a first output terminal 17A and furthermore coupled to a cathode of second diode 14, and the anode of second diode 14 is coupled to the first terminal of inductor 13. Moreover, the second terminal of capacitor 15 is coupled to second output terminal 17B and the source terminal of transistor 11.

Fig. 1B shows a variation of buck-boost converter 10 of Fig. 1A and differs from Fig. 1A only with respect to the placement of the first diode. Instead of first diode 12 coupled between the drain terminal of transistor 12 and second input terminal, a first diode 12A is provided. An anode of first diode 12A is coupled to the first terminal of inductor 13, and a cathode of first diode 12A is coupled to first input terminal 16A. Moreover, the drain terminal of transistor 11 is coupled to second input terminal 16B. Otherwise, the buck-boost converter of Fig. 1B corresponds to the one of Fig. 1A, and the operation is the same. In particular, first diode 12B of Fig. 1B serves the same function as first diode 12 of Fig. 1A. Therefore, in the embodiments described in the following, the buck-boost converter of Fig. 1A may be replaced by the buck-boost converter of Fig. 1B and vice versa.

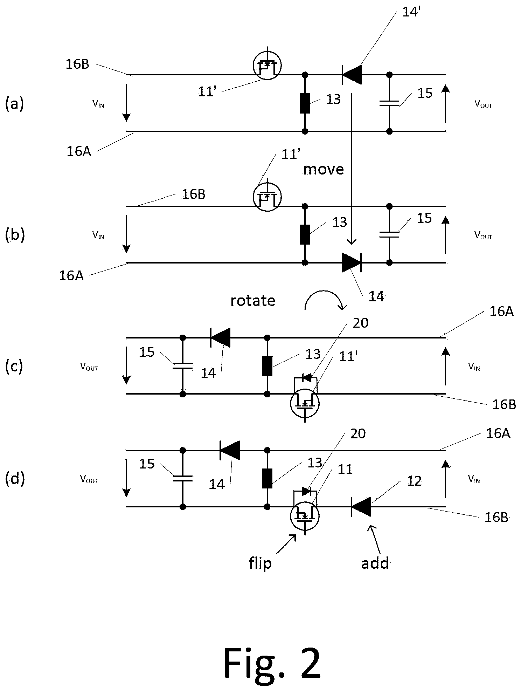

Before describing operation of the buck-boost converter of Fig. 1A, referring to Fig. 2 it will be described how the buck-boost converter of Fig. 1A is related to a conventional buck-boost converter, which is shown in line (a) of Fig. 2. The buck-boost converter of Fig. 1A is reproduced in line (d) of Fig. 2. Please note that in lines (a) and (b), the input voltage V_{IN} is on the left side and the output voltage V_{OUT} is on the right side, whereas in lines (c) und (d), similar to Fig. 1A, the input voltage V_{IN} is on the right side and output voltage V_{OUT} is on the left side.

In the conventional buck-boost converter of line (a) of Fig. 2, also the output voltage is provided across capacitor 15, and inductor 13 is provided. A transistor 11' is provided between a terminal of inductor 13 and the input voltage. Please note that in line (a), the source terminal is coupled to the input terminal, and the drain terminal is coupled to the inductor. A cathode of a diode 14' is coupled to the same terminal of inductor 13 as the drain terminal of transistor 11' .

To derive the buck-boost converter of Fig. 1A, first diode 14' is "moved" to the position of diode 14, i.e., such that the anode of diode 14 is now coupled to the other terminal of inductor 13 compared to line (a). From line (b) to (c), the representation of the circuit is simply rotated by 180° without changing the circuit. From line (c) to (d), transistor 11' is flipped to result in transistor 11, i.e. the position of the source and drain terminals are exchanged. For isolation, first diode 12 is added. In particular, through the flip, in line (d), in contrast to line (c) a body diode 20 of transistor 11 does not prevent a current flow in a direction from first input terminal 16A via inductor 13 and transistor 11 to second input terminal 16B in an off state of transistor 11. Through providing first diode 12 (or 12B of Fig. 1B), this current flow is still prevented. It should be noted that body diode 20 is explicitly shown only in some of the Figures where it is helpful for explaining the operation, but for example in case of a MOSFET for transistor 11 is a general property of the transistor.

For controlling the conventional boost converter of line (a), an isolated gate driver is needed, as the source terminal is coupled to the input voltage. However, in the buck-boost converter of Fig. 1A and line (d), as the source terminal is coupled to the output side, transistor 11 may be controlled by a gate driver supplied or based on the output voltage V_{OUT}, which for example in some applications is used as a supply voltage. Therefore, the driver for controlling transistor 11 in line (d) and Fig. 1A can be based on this supply voltage without the need of an isolated driver.

Otherwise, the operation of the buck-boost converter of Fig. 1A is similar to the operation of the conventional buck-boost converter of line (a) in Fig. 2. When the respective transistor (11' or 11) is switched on, the input voltage is connected to the inductor in Fig. 1A with diode 12 allowing current flow only in one direction, effectively decoupling the charging of inductor 13 with energy from capacitor 15.

In this stage, capacitor 15 supplies energy to an output load receiving the output voltage V_{OUT}. When the transistor 11, 11' is switched off, the current in the inductor remains flowing, therefore changing the voltage level over the inductor and allowing to transfer energy from inductor 13 to capacitor 15 via diode 14.

Depending on the duty cycle (on-time of transistor 11, 11' versus off-time of transistor 11, 11'), the magnitude of the output voltage V_{OUT} may be greater than, equal to or smaller than the magnitude of the input voltage V_{IN}. In some embodiments, a controlling entity (not shown in Fig. 1A) may measure the output voltage V_{OUT} via any conventional means, for example using a resistive divider, and control transistor 11, 11' accordingly. In other embodiments, the input voltage V_{IN} may be known e.g. by design, and the duty cycle may be fixed accordingly. In yet other embodiments, the regulation may be based on the input voltage V_{IN} with any other signal indicative of the input voltage V_{IN} of the buck-boost converter to regulate the output voltage, as the relation between the input voltage V_{IN} and the output voltage V_{OUT} is, for given inductance values of capacitor 15 and inductor 13, a function of the duty cycle of switch 11, 11'.

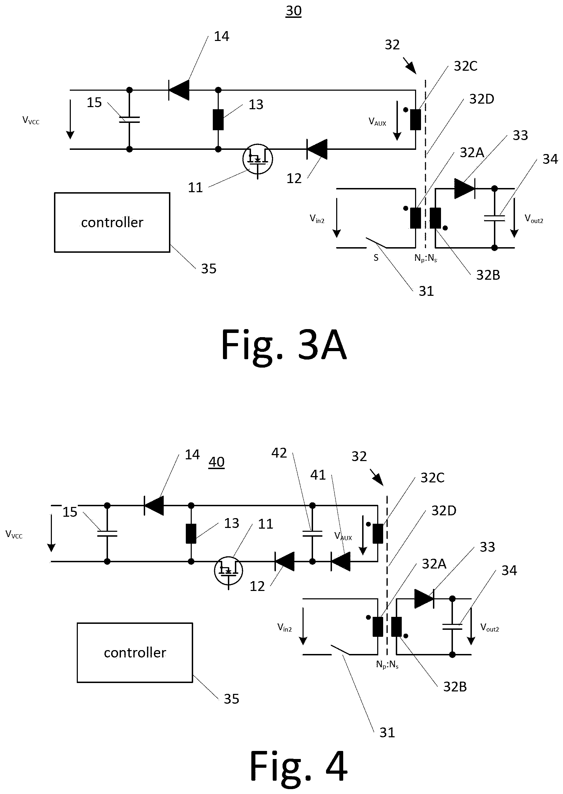

Fig. 3A illustrates employment of the buck-boost converter of Fig. 1A in a power converter 30 to generate a supply voltage Vvcc .

The power converter is shown as a schematic flyback converter, converting an input voltage Vᵢₙ₂ (not to be confused with the input voltage V_{IN} of Figures 1 and 2) to an output voltage Vₒᵤₜ₂ (again not to be confused with the output voltage V_{OUT} of Figures 1 and 2). The power converter of Fig. 3A comprises a transformer 32 providing a galvanic isolation 32D between a primary side and a secondary side. On a primary side, in the simplified representation of Fig. 3A a switch 31 is coupled to a primary side winding 32A. A secondary side winding 32B is coupled to an output capacitor 34 via a rectifying diode 33. The output voltage is provided across capacitor 34. N_{P}:N_{S} is the winding ratio between the primary side winding 32A and the secondary side winding 32B.

By closing switch 31, energy is transferred from the primary side into the transformer (charging), and by opening switch 31, energy is transferred from the transformer to the secondary side (discharging), and the output voltage Vₒᵤₜ₂ is generated in a conventional manner. Operation of switch 31 is controlled by a controller 35.

The representation of the flyback converter of Fig. 3A is only a schematic example, and any kind of power converter having a transformer for galvanic isolation may be used, and operated in a conventional manner, for example asymmetric half-bridge flyback converters which have a half-bridge arrangement of switches on the primary side. Instead of rectifying diode 33, for example also a synchronous rectifier may be used. Furthermore, feedback from the secondary side to the primary side may be used in any conventional manner. As the design and operation of such converters is known to the skilled person, no further description will be given here.

The flyback converter of Fig. 3A uses a buck-boost converter as discussed with reference to Fig. 1A to provide a supply voltage Vvcc, which supplies for example controller 35. Vvcc therefore corresponds to the output voltage V_{OUT} of Fig. 1A.

To provide an input voltage to the buck-boost converter, transformer 32 includes an auxiliary winding 32C. Auxiliary winding 32C provides a voltage Vₐᵤₓ as input voltage to the buck-boost converter. A polarity (indicated by dots in Fig. 3A) of auxiliary winding 32C is selected to be the same as the polarity of primary side winding 32A and opposite the one of secondary side winding 32B, such that the polarity of the voltage Vvcc corresponds to the polarity of Vᵢₙ₂ and Vₒᵤₜ₂ in Fig. 3A. In this case, as will also be explained below, a usable negative (according to the arrow direction of Vₐᵤₓ) input voltage for the buck-boost converter is provided during the discharge phase of the transformer, and the voltage is proportional to Vₒᵤₜ₂. If the polarity of auxiliary winding 32 were revised, the input voltage for the buck-boost converter would be proportional to Vᵢₙ₂ and usable in the charge phase of the transformer. Both possibilities may be used in embodiments.

Transistor 11 of the buck-boost converter may also be controlled by controller 35. In this respect, controller 35 need not be a single entity, but may include several entities, for example a first entity for controlling operation of switch 31 and generally the operation of the flyback converter, and a second entity controlling transistor 11. Such entity may be based on different technologies, for example a silicon-based entity and a GaN based entity.

As the source terminal of transistor 11 is coupled to the output side of the buck-boost converter, the control entity and for transistor 11 need not be isolated, but can be supplied by V_{VCC}. At startup, capacitor 15 may be charged directly from a main supply through a different path (e.g. comprising a resistor and/or depletion cell) until a startup voltage is reached. Then capacitor 15 may provide sufficient energy until V_{VCC} is established. Any conventional startup techniques may be used in this respect.

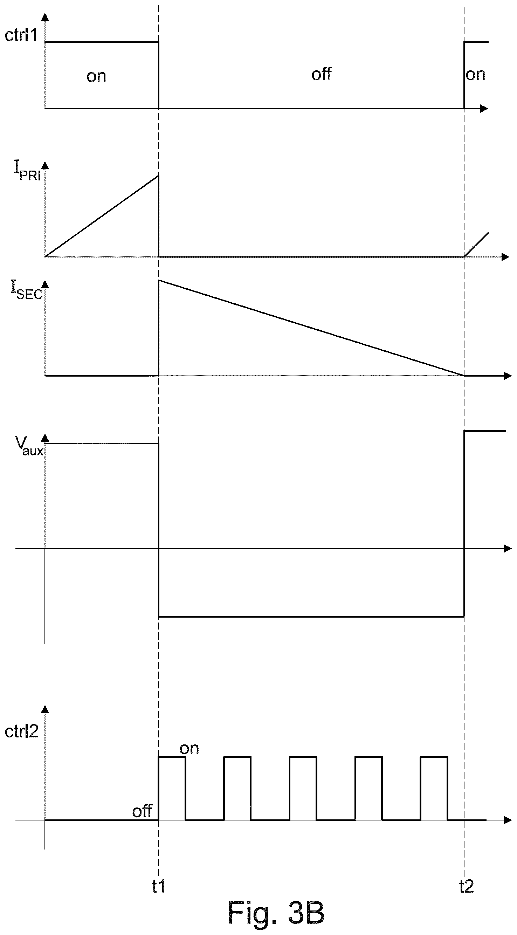

In the embodiment of Fig. 3A, controller 35 operates the buck-boost converter only when the polarity of the input voltage Vₐᵤₓ to the buck-boost converter is negative, in the configuration of Fig. 3A during the transformer discharge phase of the flyback converter, as then the voltage Vₐᵤₓ provided by auxiliary winding 32C has the correct negative polarity to serve as input voltage for the buck-boost converter. This may be achieved by controlling switch 31 and transistor 11 by the same controller, e.g. controller 35. Such a control is further illustrated in Fig. 3B. Fig. 3B schematically shows example signal curves for a control signal ctrl1 controlling switch 31, a primary side current I_{PRI}, a secondary side current I_{SEC}, an auxiliary voltage Vₐᵤₓ supplying the buck-boost converter and a control signal ctr12 controlling transistor 11. As can be seen, transistor 11 is switched on and off only during the discharge phase between times t1 and t2, where switch 31 is off and Vₐᵤₓ is negative. For the configuration of Fig. 3A, the positive value of Vₐᵤₓ (before t1 and after t2 in Fig. 3B) has a magnitude of Vᵢₙ₂(Nₐᵤₓ/N_{P}), where Nₐᵤₓ/N_{P} is the winding ratio between auxiliary winding 32C and primary side winding 32A, and the negative value of Vₐᵤₓ (between t1 and after t2) has a magnitude of Vₒᵤₜ₂(Nₐᵤₓ/N_{S}), where Nₐᵤₓ/N_{S} is the winding ratio between auxiliary winding 32C and secondary side winding 32B. If the polarity of the auxiliary winding were reversed as explained above, transistor 11 would be operated only in the charge phase, as then Vₐᵤₓ again would be negative.

Fig. 4 shows a power converter 40 according to a further embodiment, where the buck-boost converter may be operated continuously and not only during the transformer discharge phase of the flyback converter. The power converter 40 is a variation of the power converter 30 of Fig. 3, and only differences will explained below.

In power converters 40, the buck-boost converter of Fig. 1A is not directly coupled to auxiliary winding 32C, but a diode 41 and a capacitor 42 are additionally provided as shown. Capacitor 42 serves as a buffer provide a continuous input voltage to the buck-boost converter, as the capacitor 42 serves as an energy storage, and diode 41 prevents energy flowing back from capacitor 42 to auxiliary winding 32C and ensures that capacitor 42 is only charged when the voltage provided by auxiliary winding 32C has the "correct" negative polarity for operation of the buck-boost converter, i.e. charging only during the discharge phases of the transformer with the winding polarities shown in Fig. 4.

In the embodiment of Fig. 4, through the provision of diode 41 and capacitor 44, operation of the buck-boost converter need not be limited to the time periods where the voltage Vₐᵤₓ is negative, but the buck-boost converter can be operated all the time.

Simulations have shown that the buck-boost converter in Fig. 4 can provide a stable voltage V_{VCC} or for example about 12V for a wide range of voltages as auxiliary winding 32, for example in a range from 5V-50V. For example, in such a case, a duty cycle of transistor 11 may be around 7% at 40kHz for a voltage at auxiliary winding of 50V, and for a voltage at the auxiliary winding of 5V the duty cycle may be about 80%.

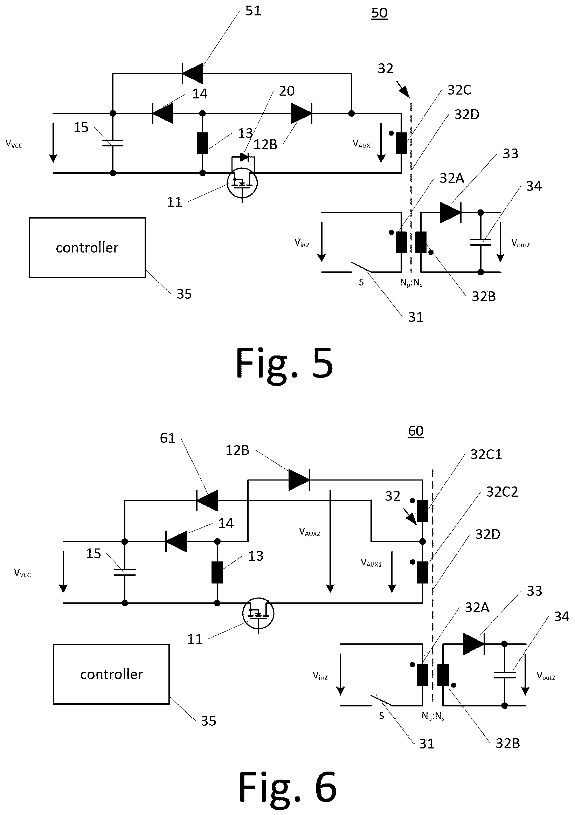

Fig. 5 illustrates a power converter 50 according to a further embodiment. Power converter 50 is based on power converter 30 of Fig. 3. Compared to Fig. 3, the power converter of Fig. 1B is used with the diode 12B. As already explained, this is independent from other modifications and may also be done in other embodiments. Moreover, a third diode 51 couples the auxiliary winding, i.e. an input of the buck-boost converter, to a terminal of capacitor 15.

In the embodiment of Fig. 5, when Vₐᵤₓ is positive (charge phase of the transformer for the polarities shown), if the input voltage Vᵢₙ₂ is high enough capacitor 15 is charged with the positive auxiliary winding voltage V_{AUX} via diode 51 and body diode 20 of transistor 11, for example if Vᵢₙ₂ is of the order of 400V. Note that to enable this charging, in the embodiment of Fig. 5 diode 12B as in Fig. 1B is used, as diode 12 of Fig. 1A would block the charging. In the discharge phase of the transformer, V_{AUX} is negative (corresponding to the different polarities of input and output voltage of the buck-boost converter in Fig. 1B), the buck-boost converter may be used for charging capacitor 15 to generate the output voltage V_{VCC}, especially if Vᵢₙ₂ is not high enough to result into sufficient auxiliary winding voltage to charge capacitor 15 via diode 50 directly. In other embodiments, additionally diode 41 and capacitor 42 may also be provided in power converter 50. Furthermore, in case transistor 11 does not have a body diode allowing charging of capacitor 15 in case of a positive Vₐᵤₓ above, e.g. in case of a GaN transistor with high forward voltage of the body diode, an additional freewheeling diode may be provided.

The charging of capacitor 15 via diode 51 may be problematic in some applications with high Vᵢₙ₂, leading to high voltages V_{AUX} provided by auxiliary winding 32C (e.g. V_{AUX} significantly exceeding the required voltage V_{VCC}). Fig. 6 shows a variation of the embodiment of Fig. 5 in form of a power converter 60. In power converter 60 of Fig. 6, the auxiliary winding is split or has a middle contact between winding parts 32C1 and 32C2. The buck-boost converter is coupled to the "full" auxiliary winding (32C1 plus 32C2) to receive a voltage V_{AUX2} as an input voltage, and a diode 61 corresponding to diode 51 of Fig. 5, which directly charges capacitor 15, is coupled to a middle node between winding parts 32C1, 32C2, to receive a voltage V_{AUX1}. Therefore, the voltage V_{AUX1} is limited based on a winding ratio of winding parts 32C1, 32C2 and the winding ration N_{P}:N_{S} between primary side winding 32A and secondary side winding 32B.

As a numerical example, the winding ratio N_{P}:N_{S} may be 70:10. The winding ratio of part 32C1 to part 32C2 of the auxiliary winding in relation thereto may be 7:3, such that the overall number of turns of the auxiliary winding (32C1 plus 32C2) is equal to the number of turns of secondary side winding 32B.

In case of an input voltage Vᵢₙ₂ of 400V the voltage V_{AUX1} at the auxiliary winding part 32C2 with would be 400V x 3/70=17.14V. Subtracting the forward voltage drop-off diode 61 and the transistor body diode 20, a supply voltage of about 15V is available without buck-boost operation. If Vᵢₙ₂ is lower, the buck-boost converter may take over the provision of V_{VCC} supply. In this example, the overall auxiliary winding (parts 32C1 to 32C2) has the same number of turns as secondary side winding 32B, which leads to a voltage V_{AUX2} similar to the output voltage range of Vₒᵤₜ₂. In case of a full range USB-PD voltage Vₒᵤₜ₂ from about 5V to about 48V, this means that this voltage range V_{AUX2} may be converted to a supply voltage V_{VCC} of about 15V with a buck or boost operation of the buck-boost converter. The above numbers are only examples, and other numbers for the windings and winding ratios may be used. For example, in some embodiments secondary side winding and/or auxiliary windings with only one turn may be used.

It should be noted that while in the above embodiments the auxiliary winding 32C is shown on the primary side of transformer 32, in other embodiments also an auxiliary winding on the secondary side may be used, e.g. to provide a power supply for a secondary side controller.

Embodiments discussed above may have a lower area requirement and/or lower bill of materials (BOM) compared to conventional solutions. Moreover, a control entity like controller 35 only requires a single terminal to control the buck-boost converter, namely, to control transistor 11.

Some embodiments are defined by the following examples:
Example 1. A buck-boost converter, comprising:
   a first input terminal and a second input terminal configured to receive an input voltage,
   a first output terminal and a second output terminal configured to provide an output voltage,
   a transistor, an inductor, a capacitor, a first diode and a second diode,
   wherein a first terminal of the capacitor is coupled to the first output terminal and a cathode of the second diode, an anode of the second diode is coupled to the first terminal of the inductor and a second terminal of the capacitor is coupled to the second output terminal and the second terminal of the inductor wherein the transistor comprises a first terminal, a second terminal and a control terminal,
   wherein the transistor is switchable by applying a control signal between the second terminal and the control terminal,
   wherein the second terminal of the transistor is coupled to a second terminal of the inductor,
   wherein either:
      - the first diode is provided with an anode coupled to the first terminal of the inductor and a cathode coupled to the first input terminal, and the first terminal of the transistor is coupled to the second input terminal,
         or
      - a first terminal of the inductor is coupled to the first input terminal
   the first diode is provided with the anode coupled to the second input terminal and the cathode coupled to the first terminal of the transistor.
Example 2. The buck-boost converter of example 1, further comprising a controller configured to control the transistor such that the buck-boost converter generates the output voltage based on the input voltage.
Example 3. The buck-boost converter of example 1 or 2, further comprising:
   a further capacitor and a third diode, wherein a first terminal of the further capacitor is coupled to the first input terminal, the first terminal of the inductor and the anode of the second diode, a second terminal of the further capacitor is coupled to the drain terminal of the transistor and a cathode of the third diode, and wherein an anode of the third diode is coupled to the second input terminal.
Example 4. The buck-boost converter of any one of examples 1 to 3, further comprising a fourth diode, wherein an anode of the fourth diode is coupled to the first input terminal, and a cathode of the fourth diode is coupled to the first terminal of the capacitor.
Example 5. The buck-boost converter of any one of examples 1 to 3,
   further comprising a fifth diode, wherein an anode of the fifth diode is coupled to a third input terminal, and a cathode of the fifth diode is coupled to the first terminal of the capacitor.
Example 6. The buck-boost converter of any one of examples 1 to 5, wherein the transistor is a MOSFET transistor, the first terminal of the transistor is a drain terminal and the second terminal of the transistor is a source terminal.
Example 7. A power converter, comprising:
   a primary side configured to receive an input power and
   coupled to a primary side winding of a transformer,
   a secondary side configured to output an output power and coupled to a secondary side winding of the transformer, and the buck-boost converter of any one of examples 1 to 6,
   wherein the first input terminal of the buck-boost converter is coupled to a first terminal of an auxiliary winding of the transformer, and the second input terminal of the buck-boost converter is coupled to a second terminal of the auxiliary winding.
Example 8. The power converter of example 7, wherein the buck-boost converter is the buck-boost converter of example 5, wherein the third input terminal of the buck-boost converter is coupled to a middle terminal of the auxiliary winding between the first terminal and the second terminal.
Example 9. The power converter of example 8, wherein the auxiliary winding is on a primary side of the transformer, wherein a ratio of a number of windings between the middle terminal and the second terminal of the auxiliary winding to a number of windings of the primary side winding is selected such that for a predefined nominal input voltage the fifth diode provides a desired output voltage to the capacitor.
Example 10. The power converter of any one of examples 7 to 9, further comprising a power converter controller coupled to the first and second output terminals of the buck-boost converter to be supplied by the output voltage of the buck-boost converter.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A buck-boost converter (10), comprising:
a first input terminal (16A) and a second input terminal (16B) configured to receive an input voltage (V_{IN}),
a first output terminal (17A) and a second output terminal (17B) configured to provide an output voltage (V_{OUT}, V_{VCC}),
a transistor (11), an inductor (13), a capacitor (15), a first diode (12, 12B) and a second diode (14),
wherein a first terminal of the capacitor (15) is coupled to the first output terminal (17A) and a cathode of the second diode (14), an anode of the second diode (14) is coupled to the first terminal of the inductor (13) and a second terminal of the capacitor (15) is coupled to the second output terminal (17B) and the second terminal of the inductor (13)wherein the transistor (11) comprises a first terminal, a second terminal and a control terminal,
wherein the transistor is switchable by applying a control signal between the second terminal and the control terminal,
wherein the second terminal of the transistor (11) is coupled to a second terminal of the inductor (13),
wherein either:
- the first diode (12B) is provided with an anode coupled to the first terminal of the inductor (13) and a cathode coupled to the first input terminal (16A), and the first terminal of the transistor (11) is coupled to the second input terminal (16B),
or
- a first terminal of the inductor (13) is coupled to the first input terminal (16A)
the first diode (12) is provided with the anode coupled to the second input terminal (16B) and the cathode coupled to the first terminal of the transistor (11).

2. The buck-boost converter (10) of claim 1, further comprising a controller (35) configured to control the transistor (11) such that the buck-boost converter (10) generates the output voltage (V_{OUT}, V_{VCC}) based on the input voltage (V_{IN}).

3. The buck-boost converter (10) of claim 1 or 2, further comprising:
a further capacitor (42) and a third diode (41), wherein a first terminal of the further capacitor (42) is coupled to the first input terminal (16A), the first terminal of the inductor (13) and the anode of the second diode (14), a second terminal of the further capacitor (42) is coupled to the drain terminal of the transistor (11) and a cathode of the third diode (41), and wherein an anode of the third diode (41) is coupled to the second input terminal (16B).

4. The buck-boost converter (10) of any one of claims 1 to 3, further comprising a fourth diode (51), wherein an anode of the fourth diode (51) is coupled to the first input terminal (16A), and a cathode of the fourth diode (51) is coupled to the first terminal of the capacitor (15).

5. The buck-boost converter (10) of any one of claims 1 to 3,
further comprising a fifth diode (61), wherein an anode of the fifth diode (61) is coupled to a third input terminal, and a cathode of the fifth diode (61) is coupled to the first terminal of the capacitor (15).

6. The buck-boost converter (10) of any one of claims 1 to 5, wherein the transistor (11) is a MOSFET transistor, the first terminal of the transistor (11) is a drain terminal and the second terminal of the transistor (11) is a source terminal.

7. A power converter (30, 40, 50, 60), comprising:
a primary side configured to receive an input power and coupled to a primary side winding (32A) of a transformer (32),
a secondary side configured to output an output power and coupled to a secondary side winding (32B) of the transformer (32), and
the buck-boost converter (10) of any one of claims 1 to 6,
wherein the first input terminal (16A) of the buck-boost converter (10) is coupled to a first terminal of an auxiliary winding (32C) of the transformer (32), and the second input terminal (16B) of the buck-boost converter (10) is coupled to a second terminal of the auxiliary winding (32C).

8. The power converter (30, 40, 50, 60) of claim 7, wherein the buck-boost converter (10) is the buck-boost converter (10) of claim 5, wherein the third input terminal of the buck-boost converter (10) is coupled to a middle terminal of the auxiliary winding (32C) between the first terminal and the second terminal.

9. The power converter of claim 8, wherein the auxiliary winding (32C) is on a primary side of the transformer (32), wherein a ratio of a number of windings between the middle terminal and the second terminal of the auxiliary winding to a number of windings of the primary side winding is selected such that for a predefined nominal input voltage the fifth diode (61) provides a desired output voltage to the capacitor (15) .

10. The power converter of any one of claims 7 to 9, further comprising a power converter controller (35) coupled to the first and second output terminals (17A, 17B) of the buck-boost converter (10) to be supplied by the output voltage (V_{OUT}, V_{VCC}) of the buck-boost converter (10) .
